# EUROPEAN PATENT SPECIFICATION

(11) **EP 4 639 431 B1**
(45) Date of publication and mention of the grant of the patent: **11.03.2026**
(21) Application number: 23813422.5
(22) Date of filing: 22.11.2023
(51) Int. Cl.: G06N 20/00

(54) **COMPUTER-IMPLEMENTED METHOD FOR PERFORMING A COMPUTATIONAL TASK USING A MACHINE LEARNING MODEL**
COMPUTERIMPLEMENTIERTES VERFAHREN ZUR DURCHFÜHRUNG EINER COMPUTERAUFGABE UNTER VERWENDUNG EINES MASCHINENLERNMODELLS
PROCÉDÉ MIS EN OEUVRE PAR ORDINATEUR POUR EFFECTUER UNE TÂCHE DE CALCUL À L'AIDE D'UN MODÈLE D'APPRENTISSAGE AUTOMATIQUE

(30) Priority: 19.12.2022 FI 20226119
(43) Date of publication of application: 29.10.2025
(73) Proprietor: Elisa Oyj, 00520 Helsinki (FI)
(72) Inventor: RUUTU, Ville, 00520 Helsinki (FI); RUUTU, Jussi, 00520 Helsinki (FI); DERRAR, Honain, 00520 Helsinki (FI)
(74) Representative: Papula Oy
(86) International application number: PCT/FI2023/050642
(87) International publication number: WO 2024/134011

(56) References cited:
- WO-A1-2022/161644
- WO-A1-2022/161644
- US-A1- 2022 058 512
- US-A1- 2022 058 512

## Description

### TECHNICAL FIELD

The present disclosure relates to computing, and more particularly to a computer-implemented method for performing a computational task using a machine learning model, a computing device, and a computer program product.

### BACKGROUND

Energy efficiency in all areas of human activity has become ever more important during recent years. Green Computing aims to use computers and other computing devices and equipment in energy-efficient and eco-friendly ways.

One increasingly important area of computing is machine learning (ML) that is used in various applications, such as speech recognition, which aims at transforming speech signals into text corresponding, as accurately as possible, to the content of the speech signal. There exists several different types of machine learning algorithms, each of which can have several tuneable parameters resulting in different computing needs.

Publication WO2022/161644 A1 discloses a method for selecting a machine learning model to be deployed in an execution environment having resource constraints. The method comprises receiving, by an apparatus, a request for a machine learning model solving a task T using a feature set F. Further, the method includes retrieving, from a model store, a first set of machine learning models that solves the task T using at least a subset of features F. The complexity of each machine learning model in the first set of machine learning models is calculated. The method includes determining, from the first set of machine learning models, at least one suitable machine learning model to be deployed, wherein the determining is based on the calculated complexity and the resource constraints of the execution environment.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide a computer-implemented method for performing a computational task using a machine learning model, a computing device, and a computer program product. The foregoing and other objectives are achieved by the features of the independent claims. Further implementation forms are apparent from the dependent claims, the description and the figures.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a flow chart representation of a method according to an embodiment;
Fig. 2 illustrates a flow chart representation of a preparatory phase according to an embodiment;
Fig. 3 illustrates a flow chart representation of machine learning model selection according to an embodiment;
Fig. 4 illustrates a flow chart representation of minimum performance threshold determination according to an embodiment;
Fig. 5 illustrates a schematic representation of data flow according to an embodiment; and
Fig. 6 illustrates a schematic representation of a computing device according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined in the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

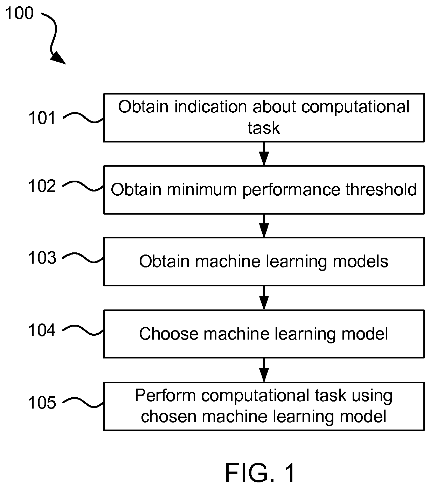

Fig. 1 illustrates a flow chart representation of a method according to an embodiment.

According to an embodiment, a computer-implemented method 100 for performing a computational task using a machine learning model comprises obtaining 101 an indication about a computational task to be performed.

The indication about a computational task may indicate the computational task to be performed in various ways. For example, the indication may comprise data on which the computational task is to be performed and the indication may indicate which type of computational task is to be performed on the data. For example, in some embodiments, the method 100 may be implemented as a software function/method/subroutine and the indication may be provided to the function/method/subroutine as a parameter. For example, the indication may comprise audio data comprising speech and indicate that a speech-to-text conversion is to be performed on the audio data.

The method 100 does further comprise obtaining 102 at least one minimum performance threshold for the computational task.

The at least one minimum performance threshold may be obtained in various ways, such as those disclosed in the embodiments herein. For example, the at least one minimum performance threshold may be provided with the indication about the computational task to be performed. For example, in some embodiments, the method 100 may be implemented as a software function/method/subroutine and the at least one minimum performance threshold may be provided to the function/method/subroutine as a parameter and/or parameters.

The method 100 does further comprise obtaining 103 a plurality of machine learning models, wherein each machine learning model in the plurality of machine learning models is associated with at least one performance indicator and at least one resource consumption indicator.

The at least one performance indicator and the at least one resource consumption indicator may be associated with the corresponding machine learning model in various ways. For example, each machine learning model may be stored in a preconfigured data structure and the data structure may further comprise the at least one performance indicator and the at least one resource consumption indicator of the machine learning model. Alternatively or additionally, the at least one performance indicator and the at least one resource consumption indicator may be associated with the corresponding machine learning model in some other ways.

The method 100 does further comprise choosing 104 a machine learning model out of the plurality of machine learning models based at least on the at least one minimum performance threshold for the computational task, the at least one performance indicator of each machine learning model in the plurality of machine learning models and the at least one resource consumption indicator of each machine learning model in the plurality of machine learning models.

The choosing 104 the machine learning model out of the plurality of machine learning models may also be referred to as selecting a machine learning model out of the plurality of machine learning models.

The choosing 104 the machine learning model out of the plurality of machine learning models may comprise, for example, comparing the at least one minimum performance threshold for the computational task and the at least one performance indicator of each machine learning model in the plurality of machine learning models. Thus, the subset of machine learning models that fulfil the least one minimum performance threshold can be found. The machine learning model for performing the computation task can then be chosen out of this subset based on, for example, the at least one resource consumption indicator of each machine learning model.

The method 100 does further comprise performing 105 the computational task using the chosen machine learning model.

The method 100 selects a machine learning (ML) model that meets the minimum performance threshold but also minimizes the resource consumption of the computational task.

The plurality of ML models may comprise ML models that are already optimized with respect to performance vs. resource consumption but still offer various levels of performance.

Herein, "obtaining" may comprise, for example, obtaining the data in question from memory, performing some processing and obtaining the data as a result of the processing, receiving the data from a function/method/device/module, and/or similar.

The method 100 may further comprise any operations, such as those disclosed in the embodiments herein, before and/or after any of the operations 101 - 105. Further, at least some of the operations 101 - 105 may be performed conditionally. For example, the method 100 may further comprise additional conditions that can be checked after any of the operations 101 - 105 and whether a subsequent operation is performed may depend on the outcome of the condition.

According to an embodiment, the computation task comprises a speech-to-text conversion and the at least one minimum performance threshold comprises a maximum word error rate (WER).

Herein, speech-to-text conversion may also be referred to as speech recognition, automatic speech recognition (ASR), speech transcription, or similar.

For example, in a speech-to-text conversion task, the minimum performance threshold can be to have a WER less than 25% (a lower WER is better). An ML model that meets this requirement but that has, for example, the smallest number of parameters can then be selected by the method 100. In practice, the plurality of ML models can comprise, for example, ML models with 23% WER, 20% WER, and 18% WER etc. Assuming that the number of parameters increases when WER decreases, the model with 23% would be sufficient in such an example.

ML models when applied to, for example, speech recognition for voicebots or similar applications, can be computationally resource consuming, and therefore also energy consuming. Thus, the method 100 can decrease computational load and energy demands when ML models are used.

The method 100 can, for example, result in energy savings.

The method 100 can, for example, lower costs associated with performing computational tasks using ML models.

The method 100 can, for example, ensure sufficient performance level for the computational task.

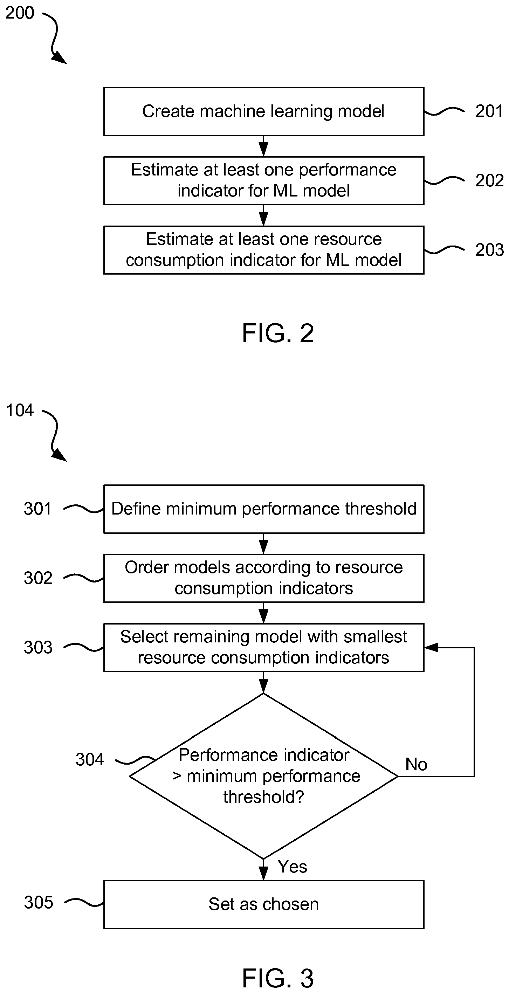

Fig. 2 illustrates a flow chart representation of a preparatory phase according to an embodiment.

The embodiment of Fig. 2 illustrates how each ML model can be prepared for the method 100.

For each available ML model, a preparatory phase 200 may comprise, creating 201 an ML model, estimating 202 at least one performance indicator for the ML model, and estimating 203 at least one resource consumption indicator for the ML model.

The at least one minimum performance threshold is dependent on the type of computational task to be performed and the application in which the computational task is performed. For example, (near) real-time speech recognition tasks (such as an interactive voicebot) can require low-latency execution while, in other cases, conversion of audio recordings to text can be executed slowly i.e. with a higher latency.

According to an embodiment, the at least one minimum performance threshold comprises at least one of: a maximum execution time, a minimum accuracy, a minimum precision, a minimum recall, a minimum specificity, a maximum miss-rate, a maximum fall-out, a minimum F1 score, a minimum area under curve, and/or a minimum kappa statistic.

The maximum execution time may set a maximum length of time for performing of the computational task.

The minimum accuracy may set a minimum accuracy that the chosen ML model needs to achieve.

The minimum precision may set a minimum precision that the chosen ML model needs to achieve.

The minimum recall may set a minimum recall that the chosen ML model needs to achieve.

The minimum specificity may set a minimum specificity that the chosen ML model needs to achieve.

The maximum miss-rate may set a maximum miss-rate that the chosen ML model needs to achieve.

The maximum fall-out may set a maximum fall-out that the chosen ML model needs to achieve.

The minimum F1 score may set a minimum F1 score that the chosen ML model needs to achieve.

The minimum area under curve may set a minimum area under curve (AUC) that the chosen ML model needs to achieve. AUC may also be referred to as AUC of receiver operating characteristic (ROC) curve.

The minimum kappa statistic may set a minimum kappa statistic that the chosen ML model needs to achieve. Kappa statistic may also be referred to as Cohen's Kappa Statistic, Cohen's kappa coefficient, or similar.

Correspondingly, the at least one performance indicator of each ML model in the plurality of ML models may comprise at least one of: an estimated execution time, an estimated accuracy, an estimated precision, an estimated recall, an estimated specificity, an estimated miss-rate, an estimated fall-out, an estimated F1 score, an estimated area under curve, and/or an estimated kappa statistic.

According to an embodiment, the computational task comprises a regression task and the at least one minimum performance threshold comprises at least one of: a maximum mean square error, a maximum root mean square error, and/or a maximum sum of squares error.

Correspondingly, the at least one performance indicator of each ML model in the plurality of ML models may comprise at least one of: an estimated mean square error, an estimated root mean square error, and/or an estimated sum of squares error.

The computational task comprises processing of a voice call and the at least one minimum performance threshold comprises at least one minimum performance threshold relating to the processing of the voice call.

At least some of the at least one performance indicator and the at least one resource consumption indicator can relate to higher-level performance of the ML model. For example, for a voicebot configured to request a caller to describe the reason for the call and then to forward the call to the correct destination, i.e., the voicebot acting as a switchboard operator, the at least one performance indicator can comprise the percentage of calls forwarded to the correct destination.

According to an embodiment, the at least one resource consumption indicator of each machine learning model in the plurality of machine learning models comprises at least one of: an estimated energy consumption of each machine learning model for the computational task, a number of parameters in each machine learning model, a number of processing operations needed to perform the computational task using each machine learning model, an estimated processing time needed to perform the computational task using each machine learning model, and/or an estimated hardware resource consumption of each machine learning model for the computational task.

The obtaining 102 the at least one minimum performance threshold for the computational task comprises: obtaining a complexity indicator of the computational task and choosing the at least one minimum performance threshold according to at least the complexity indicator of the computational task.

The complexity indicator for the computational task may quantify how complex the computation task is. For example, the complexity indicator may reflect how many possible outcomes the computational task has. The complexity indicator may also be referred to as a computational complexity indicator or similar.

For example, the computational task may comprise classifying what a caller said. If the question is a simple binary question with two possible outcomes, such as "yes" and "no", the required performance can be relatively low. If the question is more complex and the computational task can have a large number of possible outcomes, such as "describe your issue", the required performance can be relatively high.

According to an embodiment, the obtaining 102 the at least one minimum performance threshold for the computational task comprises: obtaining a risk indicator of the computational task; and choosing the at least one minimum performance threshold according to at least the risk indicator of the computational task.

The risk indicator of the computational task may quantify the impact or risk of the performing of the computational task providing an incorrect result. For example, a voicebot may ask a caller "How did I serve you today" and the computational task comprises interpreting the response of the caller, this is not very critical. On the other hand, if a caller calls to make an alarm, due to for example a water leak in an apartment, and the ML model classifies the call as non-urgent, the impact can be high. A similar example may apply in the case of an ML classification system that determines whether a financial transaction is fraudulent. Errors in the prediction for small transactions may be acceptable if it saves computational resources, while errors may not be acceptable for larger transactions. Thus, in such applications, the risk indicator may be, for example, proportional to the size of the transaction.

According to an embodiment, the obtaining 102 the at least one minimum performance threshold for the computational task comprises: obtaining metadata related to the computational task; and choosing the at least one minimum performance threshold according to at least the metadata related to the computational task.

The metadata may comprise any information and/or additional data related to the computational task.

For example, if the computational task comprises transcribing speech of a caller for a voicebot, the metadata may comprise information about the caller. The metadata may be obtained based on, for example, the caller's phone number. Such metadata can be used to help to select an appropriate ML model. For example, it may be known from earlier transcription tasks that the speaker's voice is unclear, and a better performing model has been required previously. Then this information can be used to be on the safe side and select a better model, with possibly a higher resource consumption, than normally by increasing the minimum performance threshold.

Another unclaimed example is text classification, such as classifying chat messages or emails based on their topic. In such applications, the metadata can comprise information about the sender and/or context. This may help to select an appropriate minimum performance threshold.

Fig. 3 illustrates a flow chart representation of machine learning model selection according to an embodiment.

The choosing 104 the machine learning model out of the plurality of machine learning models comprises choosing a machine learning model that meets the at least one minimum performance threshold and minimizes resource consumption.

The choosing 104 the ML model out of the plurality of ML models comprises defining 301 the at least one minimum performance threshold.

The choosing 104 the ML model out of the plurality of ML models may further comprise ordering 302 the plurality of ML models according to the at least one resource consumption indicator of each ML model.

The choosing 104 the ML model out of the plurality of ML models does further comprise selecting 303 from the plurality of ML models the ML model with the smallest resource consumption indicator(s).

The selected ML model may be removed from the plurality of ML models for the rest of the choosing procedure 104. For example, if the plurality of ML models are ordered onto a list in operation 302, the ML model selected in operation 303 may be removed from the list.

The choosing 104 the ML model out of the plurality of ML models may further comprise checking 304 whether the performance indicator(s) of the currently selected ML model is/are greater than the at least one minimum performance threshold.

The choosing 104 the ML model out of the plurality of ML models may further comprise, in response to the performance indicator(s) of the currently selected ML model being greater than the at least one minimum performance threshold, setting 305 the currently selected ML model as the chosen ML model.

The choosing 104 the ML model out of the plurality of ML models may further comprise, in response to the performance indicator(s) of the currently selected ML model not being greater than the at least one minimum performance threshold, selecting 303 from the plurality of ML models another ML model with the smallest resource consumption indicator(s). Thus, the operations 303 - 304 may be performed repeatedly until an ML model with satisfactory performance indicator(s) is found.

According to an embodiment, the method 100 further comprises, in response to none of the plurality of machine learning models fulfilling the at least one minimum performance threshold, choosing a machine learning model that has the at least one performance indicator closest to the at least one minimum performance threshold out of the plurality of machine learning models or directing the choosing the machine learning model to a human. Such a back-off policy can allow the method 100 to choose a machine learning model even in situations where none of the machine learning models fulfil the at least one minimum performance threshold.

The directing the choosing the machine learning model to a human may comprise, for example, prompting a human user to choose the machine learning model via, for example, a user interface or similar. The user may also be provided with information about each machine learning model, such as the at least one performance indicator of each machine learning model, to support the decision.

In practice, there may be a correlation between model performance, such as WER, accuracy etc., and model resource consumption. Therefore, some embodiments may comprise a trimming phase of the plurality of ML models, wherein ML models with a lower performance indicator(s) and higher resource consumption indicator(s) are removed from the plurality of ML models. Thus, a smaller plurality of ML models can be maintained.

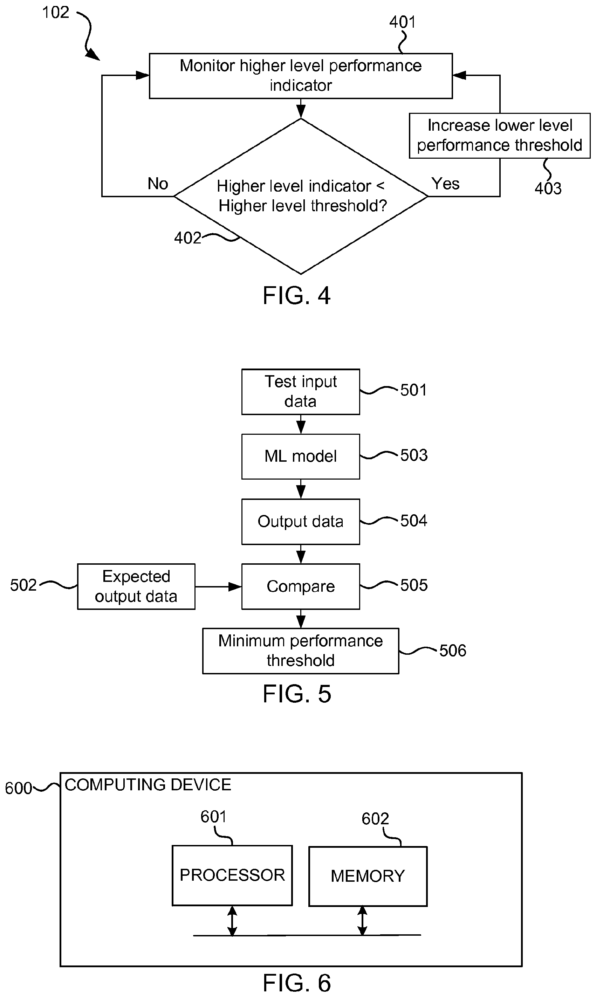

Fig. 4 illustrates a flow chart representation of minimum performance threshold determination according to an embodiment.

In some embodiments, the at least one minimum performance threshold can be set semi-permanently.

According to an embodiment, the obtaining 102 the at least one minimum performance threshold for the computational task comprises: monitoring a first performance indicator during another computational task; and adjusting the at least one minimum performance threshold based on the monitoring of the first performance indicator, wherein the at least one minimum performance threshold comprises a lower level performance indicator than the first performance indicator.

Herein, a lower level performance indicator of a higher level performance indicator may comprise a performance indicator that quantifies lower level performance of an ML model, while the higher level performance indicator quantifies higher level performance of an ML model. Thus, the lower level performance indicator and the higher level performance indicator may correlate with each other. For example, the higher level performance indicator may quantify how well the ML model can perform a specific task, such as classify an answer provided by a caller, while the lower level performance indicator, such as accuracy or F1 score, may quantify lower level performance of the ML model.

In some embodiment, a higher-level indicator can be monitored and based on it, the at least one minimum performance threshold corresponding to a lower-level performance indicator can be adjusted. The at least one minimum performance threshold can be obtained, for example, substantially continuously based on the higher level performance indicator. The embodiment of Fig. 4 illustrates an example of such a procedure.

The obtaining 102 the at least one minimum performance threshold can comprise monitoring 401 a higher-level performance indicator.

The obtaining 102 the at least one minimum performance threshold can further comprise checking 402 whether the higher-level performance indicator is below a higher level threshold.

The obtaining 102 the at least one minimum performance threshold can further comprise, in response to the higher-level performance indicator being below the higher level threshold, increasing 403 the at least one minimum performance threshold and returning to operation 401.

The obtaining 102 the at least one minimum performance threshold can further comprise, in response to the higher-level performance indicator not being below the higher level threshold, returning to operation 401.

Thus, by repeatedly and/or substantially continuously performing the procedure illustrated in the embodiment of Fig. 4, the at least one minimum performance threshold can be maintained at an appropriate level.

For example, a voicebot may classify a caller's reason to call, and then asks to confirm the classification. For example, the voicebot may ask "Did I understand correctly that you want to make a new order". If the percentage of correct classifications, corresponding to the higher level indicator, is too low, i.e., below a higher level threshold, based on the confirmation question, the voicebot may raise the at least one minimum performance threshold such as accuracy or F1 score. Thus, a more appropriate ML model can be selected.

Some embodiments can comprise a two or more level approach for the performance indicators and selection of a ML model.

Fig. 5 illustrates a schematic representation of data flow according to an embodiment.

In some embodiments, the at least one minimum performance threshold can be automatically adjusted.

For example, the automatic adjustment can be based on a feedback loop where, for example, humans can compare the predictions of different ML models and select the ML model(s) with sufficient performance thus informing about the required performance.

The embodiment of Fig. 5 illustrates another example of automatic adjustment of the at least one minimum performance threshold.

According to an embodiment, the obtaining 102 the at least one minimum performance threshold for the computational task comprises: obtaining test input data 501; obtaining an expected output data 502 for the test input data 501; feeding the test input data 501 into at least one machine learning model 503 in the plurality of machine learning models, thus obtaining at least one output data 504; comparing 505 the at least one output data 504 and the expected output data 502; and obtaining the at least one minimum performance threshold 506 based at least on the comparison 505 of the at least one output data 504 and the expected output data 502.

For example, a voicebot may ask a caller a calibration question such as "Please tell your name". Based on the caller's phone number, the expected answer, corresponding to the expected output data 502, can be known. The caller's answer, corresponding to the test input data 501, can be transcribed using the ML model 503. The resulting output data 504 can be compared 505 to the expected output data 502. If the output data 504 and the expected output data 502 do not sufficiently match, the minimum performance threshold can be raised and thus, a better ML model may be chosen. The procedure can then be performed again as many times as is needed to achieve sufficient match between the output data 504 and the expected output data 502.

The comparison 505 can be based on, for example, a string metric, such as a Levenshtein distance, an edit distance, a Damerau-Levenshtein distance, a Hamming distance, or similar.

Fig. 6 illustrates a schematic representation of a computing device according to an embodiment.

According to an embodiment, a computing device 600 comprises at least one processor 601 and at least one memory 602 including computer program code, the at least one memory 602 and the computer program code configured to, with the at least one processor 601, cause the computing device to perform the method 100.

The computing device 600 may comprise at least one processor 601. The at least one processor 601 may comprise, for example, one or more of various processing devices, such as a co-processor, a microprocessor, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The computing device 600 may further comprise a memory 602. The memory 602 may be configured to store, for example, computer programs and the like. The memory 602 may comprise one or more volatile memory devices, one or more non-volatile memory devices, and/or a combination of one or more volatile memory devices and non-volatile memory devices. For example, the memory 602 may be embodied as magnetic storage devices (such as hard disk drives, magnetic tapes, etc.), optical magnetic storage devices, and semiconductor memories (such as mask ROM, PROM (programmable ROM), EPROM (erasable PROM), flash ROM, RAM (random access memory), etc.).

The computing device 600 may further comprise other components not illustrated in the embodiment of Fig. 6. The computing device 600 may comprise, for example, an input/output bus for connecting the computing device 600 to other devices. Further, a user may control the computing device 600 via the input/output bus.

When the computing device 600 is configured to implement some functionality, some component and/or components of the computing device 600, such as the at least one processor 601 and/or the memory 602, may be configured to implement this functionality. Furthermore, when the at least one processor 601 is configured to implement some functionality, this functionality may be implemented using program code comprised, for example, in the memory.

The computing device 600 may be implemented at least partially using, for example, a computer, some other computing device, or similar.

The method 100 and/or the computing device 600 may be utilised in, for example, ASR application such as in a so-called voicebot. A voicebot may be configured to obtain information from users by, for example, phone and convert the voice information into text information using ASR. The method 100 may be used to, for example, choose an appropriate ML model to be used for the ASR or for some other computational task related to the processing of the voice call. The voicebot may further be configured to further process, such as classify, the text information. The voicebot can, for example, ask questions about, for example, basic information from a customer in a customer service situation over the phone, obtain the answers using ASR and the method 100, and save the information in a system. Thus, the customer service situation can be made more efficient and user experience can be improved.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the claims.

## Claims

1. A computer-implemented method (100) for performing a computational task using a machine learning model, the method comprising:
obtaining (101) an indication about a computational task to be performed;
obtaining (102) at least one minimum performance threshold for the computational task, wherein the computational task comprises processing of a voice call and the at least one minimum performance threshold comprises at least one minimum performance threshold relating to the processing of the voice call, and the obtaining the at least one minimum performance threshold for the computational task comprises: obtaining a complexity indicator of the computational task and choosing the at least one minimum performance threshold according to at least the complexity indicator of the computational task;
obtaining (103) a plurality of machine learning models, wherein each machine learning model in the plurality of machine learning models is associated with at least one performance indicator and at least one resource consumption indicator;
choosing (104) a machine learning model out of the plurality of machine learning models based at least on the at least one minimum performance threshold for the computational task, the at least one performance indicator of each machine learning model in the plurality of machine learning models and the at least one resource consumption indicator of each machine learning model in the plurality of machine learning models, wherein the choosing the machine learning model out of the plurality of machine learning models comprises choosing a machine learning model that meets the at least one minimum performance threshold and minimizes resource consumption; and
performing (105) the computational task using the chosen machine learning model.

2. The computer- implemented method (100) according to claim 1, wherein the computation task comprises a speech-to-text conversion and the at least one minimum performance threshold comprises a maximum word error rate.

3. The computer- implemented method (100) according to claim 1 or claim 2, wherein the at least one minimum performance threshold comprises at least one of: a maximum execution time, a minimum accuracy, a minimum precision, a minimum recall, a minimum specificity, a maximum miss-rate, a maximum fall-out, a minimum F1 score, a minimum area under curve, and/or a minimum kappa statistic.

4. The computer- implemented method (100) according to any preceding claim, wherein the computational task comprises a regression task and the at least one minimum performance threshold comprises at least one of: a maximum mean square error, a maximum root mean square error, and/or a maximum sum of squares error.

5. The computer-implemented method (100) according to any preceding claim, wherein the at least one resource consumption indicator of each machine learning model in the plurality of machine learning models comprises at least one of: an estimated energy consumption of each machine learning model for the computational task, a number of parameters in each machine learning model, a number of processing operations needed to perform the computational task using each machine learning model, an estimated processing time needed to perform the computational task using each machine learning model, and/or an estimated hardware resource consumption of each machine learning model for the computational task.

6. The computer-implemented method (100) according to any preceding claim, wherein the obtaining the at least one minimum performance threshold for the computational task comprises:
obtaining metadata related to the computational task; and
choosing the at least one minimum performance threshold according to at least the metadata related to the computational task.

7. The computer- implemented method (100) according to any preceding claim, wherein the obtaining the at least one minimum performance threshold for the computational task comprises:
obtaining test input data;
obtaining an expected output data for the test input data;
feeding the test input data into at least one machine learning model in the plurality of machine learning models, thus obtaining at least one output data;
comparing the at least one output data and the expected output data; and
obtaining the at least one minimum performance threshold based at least on the comparison of the at least one output data and the expected output data.

8. The computer- implemented method (100) according to any preceding claim, wherein the obtaining the at least one minimum performance threshold for the computational task comprises:
monitoring a first performance indicator during another computational task; and
adjusting the at least one minimum performance threshold based on the monitoring of the first performance indicator, wherein the at least one minimum performance threshold comprises a lower level performance indicator than the first performance indicator.

9. The computer-implemented method (100) according to any preceding claim, further comprising, in response to none of the plurality of machine learning models fulfilling the at least one minimum performance threshold, choosing a machine learning model that has the at least one performance indicator closest to the at least one minimum performance threshold out of the plurality of machine learning models or directing the choosing the machine learning model to a human.

10. A computing device, comprising at least one processor and at least one memory storing instructions which, when executed by the processor, cause the computing device to perform the method according to any preceding claim.

11. A computer program product comprising instructions which cause a computer to perform the method according tc any of claims 1 - 9 when the computer program is executed by the

## Patentansprüche

1. Computerimplementiertes Verfahren (100) zum Durchführen einer Computeraufgabe unter Verwendung eines maschinellen Lernmodells, wobei das Verfahren umfasst:
Erhalten (101) einer Angabe über eine durchzuführende Computeraufgabe;
Erhalten (102) mindestens eines Mindestleistungsschwellenwerts für die Computeraufgabe, wobei die Computeraufgabe das Bearbeiten eines Sprachanrufs umfasst und der mindestens eine Mindestleistungsschwellenwert mindestens einen Mindestleistungsschwellenwert umfasst, der sich auf das Bearbeiten des Sprachanrufs bezieht, und wobei das Erhalten des mindestens einen Mindestleistungsschwellenwerts für die Computeraufgabe umfasst: Erhalten eines Komplexitätsindikators der Computeraufgabe und Auswählen des mindestens einen Mindestleistungsschwellenwerts gemäß mindestens dem Komplexitätsindikator der Computeraufgabe;
Erhalten (103) einer Mehrzahl von maschinellen Lernmodellen, wobei jedes maschinelle Lernmodell in der Mehrzahl von maschinellen Lernmodellen mit mindestens einem Leistungsindikator und mindestens einem Ressourcenverbrauchsindikator assoziiert ist;
Auswählen (104) eines maschinellen Lernmodells aus der Mehrzahl von maschinellen Lernmodellen, basierend auf dem mindestens einen Mindestleistungsschwellenwert für die Computeraufgabe, dem mindestens einen Leistungsindikator jedes maschinellen Lernmodells in der Mehrzahl von maschinellen Lernmodellen und dem mindestens einen Ressourcenverbrauchsindikator jedes maschinellen Lernmodells in der Mehrzahl von maschinellen Lernmodellen, wobei das Auswählen des maschinellen Lernmodells aus der Mehrzahl von maschinellen Lernmodellen das Auswählen eines maschinellen Lernmodells umfasst, das den mindestens einen Mindestleistungsschwellenwert erfüllt und den Ressourcenverbrauch minimiert; und
Durchführen (105) der Computeraufgabe unter Verwendung des ausgewählten maschinellen Lernmodells.

2. Computerimplementiertes Verfahren (100) gemäß Anspruch 1, wobei die Computeraufgabe eine Sprach-zu-Text-Umwandlung umfasst und der mindestens eine Mindestleistungsschwellenwert eine maximale Wortfehlerrate umfasst.

3. Computerimplementiertes Verfahren (100) gemäß Anspruch 1 oder Anspruch 2, wobei der mindestens eine Mindestleistungsschwellenwert mindestens eines der Folgenden umfasst:
eine maximale Ausführungszeit, eine Mindestgenauigkeit, eine Mindestpräzision, einen Mindest-Recall, eine Mindest-Spezifität, eine maximale Fehlquote, einen maximalen Fallout, einen Mindest-F1-Score, eine Mindestfläche unter der Kurve, und/oder eine Mindest-Kappa-Statistik.

4. Computerimplementiertes Verfahren (100) gemäß einem der vorhergehenden Ansprüche, wobei die Computeraufgabe eine Regressionsaufgabe umfasst und der mindestens eine Mindestleistungsschwellenwert mindestens eines der Folgenden umfasst: einen maximalen mittleren quadratischen Fehler, einen maximalen quadratischen Mittelwertfehler, und/oder eine maximale Summe der quadratischen Fehler.

5. Computerimplementiertes Verfahren (100) gemäß einem der vorhergehenden Ansprüche, wobei der mindestens eine Ressourcenverbrauchsindikator jedes maschinellen Lernmodells in der Mehrzahl von maschinellen Lernmodellen mindestens eines der Folgenden umfasst: einen geschätzten Energieverbrauch jedes maschinellen Lernmodells für die Computeraufgabe, eine Anzahl von Parametern in jedem maschinellen Lernmodell, eine Anzahl von Verarbeitungsvorgängen, die zur Durchführung der Computeraufgabe unter Verwendung jedes maschinellen Lernmodells erforderlich sind, eine geschätzte Verarbeitungszeit, die zur Durchführung der Computeraufgabe unter Verwendung jedes maschinellen Lernmodells erforderlich ist, und/oder einen geschätzten Hardware-Ressourcenverbrauch jedes maschinellen Lernmodells für die Computeraufgabe.

6. Computerimplementiertes Verfahren (100) gemäß einem der vorhergehenden Ansprüche, wobei das Erhalten der mindestens einen Mindestleistungsschwellenwert für die Computeraufgabe umfasst:
Erhalten von Metadaten, die die Computeraufgabe betreffen; und
Auswählen des mindestens einen Mindestleistungsschwellenwert gemäß mindestens den Metadaten, die die Computeraufgabe betreffen.

7. Computerimplementiertes Verfahren (100) gemäß einem der vorhergehenden Ansprüche, wobei das Erhalten des mindestens einen Mindestleistungsschwellenwerts für die Computeraufgabe umfasst:
Erhalten von Testeingabedaten;
Erhalten von erwarteten Ausgabedaten für die Testeingabedaten;
Eingeben der Testeingabedaten in mindestens ein maschinelles Lernmodell in der Mehrzahl von maschinellen Lernmodellen, wodurch mindestens ein Ausgabedatensatz erhalten wird;
Vergleichen des mindestens einen Ausgabedatensatzes und der erwarteten Ausgabedaten; und
Erhalten des mindestens einen Mindestleistungsschwellenwerts basierend auf mindestens dem Vergleich des mindestens einen Ausgabedatensatzes und der erwarteten Ausgabedaten.

8. Computerimplementiertes Verfahren (100) gemäß einem der vorhergehenden Ansprüche, wobei das Erhalten des mindestens einen Mindestleistungsschwellenwerts für die Computeraufgabe umfasst:
Überwachen eines ersten Leistungsindikators während einer anderen Computeraufgabe; und
Anpassen des mindestens einen Mindestleistungsschwellenwerts basierend auf der Überwachung des ersten Leistungsindikators, wobei der mindestens eine Mindestleistungsschwellenwert einen Leistungsindikator umfasst, der niedriger ist als der erste Leistungsindikator.

9. Computerimplementiertes Verfahren (100) gemäß einem der vorhergehenden Ansprüche, ferner umfassend, in Antwort darauf, dass keines der Mehrzahl der maschinellen Lernmodelle den mindestens einen Mindestleistungsschwellenwert erfüllt, Auswählen eines maschinellen Lernmodells aus der Mehrzahl von maschinellen Lernmodellen, das den mindestens einen Leistungsindikator aufweist, der dem mindestens einen Mindestleistungsschwellenwert am nächsten kommt, oder Überlassen der Auswahl des maschinellen Lernmodells durch einen Menschen.

10. Rechenvorrichtung, umfassend mindestens einen Prozessor und mindestens einen Speicher, der Anweisungen speichert, die, wenn sie vom Prozessor ausgeführt werden, die Rechenvorrichtung veranlassen, das Verfahren gemäß einem der vorhergehenden Ansprüche durchzuführen.

11. Computerprogrammprodukt, umfassend Anweisungen, die einen Computer veranlassen, das Verfahren gemäß einem der Ansprüche 1 - 9 durchzuführen, wenn das Computerprogramm durch den Computer ausgeführt wird.

## Revendications

1. Procédé mis en œuvre par ordinateur (100) pour effectuer une tâche de calcul à l'aide d'un modèle d'apprentissage automatique, le procédé comprenant :
l'obtention (101) d'une indication sur une tâche de calcul devant être effectuée ;
l'obtention (102) d'au moins un seuil de performance minimal pour la tâche de calcul, dans lequel la tâche de calcul comprend le traitement d'un appel vocal et le au moins un seuil de performance minimal comprend au moins un seuil de performance minimal relatif au traitement de l'appel vocal, et l'obtention du au moins un seuil de performance minimal pour la tâche de calcul comprend : l'obtention d'un indicateur de complexité de la tâche de calcul et le choix du au moins un seuil de performance minimal selon au moins l'indicateur de complexité de la tâche de calcul ;
l'obtention (103) d'une pluralité de modèles d'apprentissage automatique, dans lequel chaque modèle d'apprentissage automatique dans la pluralité de modèles d'apprentissage automatique est associé à au moins un indicateur de performance et au moins un indicateur de consommation de ressources ;
le choix (104) d'un modèle d'apprentissage automatique parmi la pluralité de modèles d'apprentissage automatique sur la base au moins du au moins un seuil de performance minimal pour la tâche de calcul, du au moins un indicateur de performance de chaque modèle d'apprentissage automatique dans la pluralité de modèles d'apprentissage automatique et du au moins un indicateur de consommation de ressources de chaque modèle d'apprentissage automatique dans la pluralité de modèles d'apprentissage automatique, dans lequel le choix du modèle d'apprentissage automatique parmi la pluralité de modèles d'apprentissage automatique comprend le choix d'un modèle d'apprentissage automatique qui satisfait le au moins un seuil de performance minimal et minimise la consommation de ressources ; et
la réalisation (105) de la tâche de calcul à l'aide du modèle d'apprentissage automatique choisi.

2. Procédé mis en œuvre par ordinateur (100) selon la revendication 1, dans lequel la tâche de calcul comprend une conversion de parole en texte et le au moins un seuil de performance minimal comprend un taux d'erreur de mot maximal.

3. Procédé mis en œuvre par ordinateur (100) selon la revendication 1 ou la revendication 2, dans lequel le au moins un seuil de performance minimal comprend au moins l'un des éléments suivants : un temps d'exécution maximal, une exactitude minimale, une précision minimale, un rappel minimal, une spécificité minimale, un taux d'échec maximal, un abandon maximal, un score F1 minimal, une aire sous la courbe minimale, et/ou une statistique kappa minimale.

4. Procédé mis en œuvre par ordinateur (100) selon une quelconque revendication précédente, dans lequel la tâche de calcul comprend une tâche de régression et le au moins un seuil de performance minimal comprend au moins l'un des éléments suivants : une erreur quadratique moyenne maximale, une racine d'erreur quadratique moyenne maximale, et/ou une somme de carrés d'erreur maximale.

5. Procédé mis en œuvre par ordinateur (100) selon une quelconque revendication précédente, dans lequel le au moins un indicateur de consommation de ressources de chaque modèle d'apprentissage automatique dans la pluralité de modèles d'apprentissage automatique comprend au moins l'un des éléments suivants : une consommation d'énergie estimée de chaque modèle d'apprentissage automatique pour la tâche de calcul, un nombre de paramètres dans chaque modèle d'apprentissage automatique, un nombre d'opérations de traitement nécessaires pour effectuer la tâche de calcul à l'aide de chaque modèle d'apprentissage automatique, un temps de traitement estimé nécessaire pour effectuer la tâche de calcul à l'aide de chaque modèle d'apprentissage automatique, et/ou une consommation de ressources matérielles estimée de chaque modèle d'apprentissage automatique pour la tâche de calcul.

6. Procédé mis en œuvre par ordinateur (100) selon une quelconque revendication précédente, dans lequel l'obtention du au moins un seuil de performance minimal pour la tâche de calcul comprend :
l'obtention de métadonnées liées à la tâche de calcul ; et
le choix du au moins un seuil de performance minimal selon au moins les métadonnées liées à la tâche de calcul.

7. Procédé mis en œuvre par ordinateur (100) selon une quelconque revendication précédente, dans lequel l'obtention du au moins un seuil de performance minimal pour la tâche de calcul comprend :
l'obtention de données d'entrée d'essai ;
l'obtention d'une donnée de sortie attendue pour les données d'entrée d'essai ;
l'introduction des données d'entrée d'essai dans au moins un modèle d'apprentissage automatique dans la pluralité de modèles d'apprentissage automatique, permettant l'obtention d'au moins une donnée de sortie ;
la comparaison de la au moins une donnée de sortie et de la donnée de sortie attendue ; et
l'obtention du au moins un seuil de performance minimal sur la base au moins de la comparaison de la au moins une donnée de sortie et de la donnée de sortie attendue.

8. Procédé mis en œuvre par ordinateur (100) selon une quelconque revendication précédente, dans lequel l'obtention du au moins un seuil de performance minimal pour la tâche de calcul comprend :
la surveillance d'un premier indicateur de performance pendant une autre tâche de calcul ; et
l'ajustement du au moins un seuil de performance minimal sur la base de la surveillance du premier indicateur de performance, dans lequel le au moins un seuil de performance minimal comprend un indicateur de performance de niveau inférieur au premier indicateur de performance.

9. Procédé mis en œuvre par ordinateur (100) selon une quelconque revendication précédente, comprenant en outre, en réponse à ce qu'aucun de la pluralité de modèles d'apprentissage automatique n'atteint le au moins un seuil de performance minimal, le choix d'un modèle d'apprentissage automatique qui présente le au moins un indicateur de performance le plus proche du au moins un seuil de performance minimal parmi la pluralité de modèles d'apprentissage automatique ou l'orientation du choix du modèle d'apprentissage automatique vers un humain.

10. Dispositif informatique, comprenant au moins un processeur et au moins une mémoire stockant des instructions qui, lorsqu'exécutées par le processeur, amènent le dispositif informatique à effectuer le procédé selon une quelconque revendication précédente.

11. Produit de programme d'ordinateur comprenant des instructions qui amènent un ordinateur à effectuer le procédé selon l'une quelconque des revendications 1 à 9 lorsque le programme d'ordinateur est exécuté par l'ordinateur.
